(19) Europäisches Patentamt

European Patent Office

Office européen des brevets

(11) EP 1 394 206 A2

(12) EUROPEAN PATENT APPLICATION

(43) Date of publication:
03.03.2004 Bulletin 2004/10

(21) Application number: 03255017.0

(22) Date of filing: 13.08.2003

(51) Int Cl.$^7$: C08L 27/24
// (C08L27/24, 33:06, 51:04),
(C08L27/24, 33:06, 51:04, 55:02),
(C08L27/24, 51:04, 55:02)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 26.08.2002 US 406026 P

(71) Applicant: ROHM AND HAAS COMPANY
Philadelphia, Pennsylvania 19106-2399 (US)

(72) Inventor: Chirgott, Paul Steve
Strongsville, Ohio 44136 (US)

(74) Representative: Kent, Venetia Katherine
Rohm and Haas (UK) Ltd
European Operations Patent Dept.
Lennig House
2 Mason's Avenue
Croydon, CR9 3NB (GB)

(54) **Chlorinated vinyl chloride resin compositions**

(57)    The invention provides novel chlorinated vinyl chloride resins including a chlorinated vinyl chloride resin component and an impact modifier component. In one embodiment, the chlorinated vinyl chloride resin compositions includes: 100 parts by weight of a chlorinated vinyl chloride resin having a combined chlorine content of 62 to 70 wt.%, and an impact modifier component which consists essentially of one of the following blends: a blend including an ABS resin and an acrylic modifier resin, or a blend including an ABS resin and an MBS resin. In this embodiment, at least one of the following must exist:

1. The impact modifier component includes graft copolymer particles having a void-containing rubber portion.

2. The impact modifier component further includes at least 1 weight percent of a processing oil component.

3. The impact modifier component further includes at least 2 weight percent of a processing aid component.

4. The impact modifier component contains at least two different populations of polymeric particles.

In another embodiment, the chlorinated vinyl chloride resin composition includes: 100 parts by weight of a chlorinated vinyl chloride resin having a combined chlorine content of 62 to 70 wt.%, and an impact modifier component which consists essentially of one of the following blends: a blend including an MBS resin and an acrylic modifier, or a blend including an MBS resin, an acrylic modifier, and an ABS resin.

EP 1 394 206 A2

**Description**

The present invention relates to a chlorinated vinyl chloride resin composition. In particular, the present invention relates to a chlorinated vinyl chloride resin composition suitable for the production of extruded pipes.

Shaped articles of chlorinated vinyl chloride resin compositions have characteristics such as high heat resistance and are used at relatively high temperatures at which conventional vinyl chloride resin compositions cannot be used due to thermal deformation. For example, the shaped articles of chlorinated vinyl chloride resin compositions are used in the form of a pipe for hot water by making use of the high thermal deformation temperature which is 20 to 40°C. higher than that of the shaped articles of vinyl chloride resin compositions.

Furthermore, when pipes are produced, chlorinated vinyl chloride resins can be shaped with a conventional extruder for vinyl chloride resins. The use of such an extrusion method is one reason for that the chlorinated vinyl chloride resin can be widely used.

However, chlorinated vinyl chloride resins have a drawback that they have inferior thermal stability to vinyl chloride resins, and thus they tend to be burnt in a shaping process. For example, a chlorinated vinyl chloride resin is colored when it is extrusion molded to produce a pipe for hot water, or in some cases, it is burnt during extrusion molding. Thus, such a produced pipe may not be commercially sold.

In addition, when a chlorinated vinyl chloride resin is extruded in the form of a pipe for hot water, the die pressure and extrusion torque of an extruder increase, and the resin is burnt. To prevent burning, with a conventional extruder for vinyl chloride resins, the discharge amount of chlorinated vinyl chloride resins should be decreased in comparison with vinyl chloride resins to reduce the die pressure and extrusion torque. That is, when extruded pipes are produced from chlorinated vinyl chloride resins, the discharge amount of the resins is low, and thus the productivity of the pipes decreases.

WO Patent Application 2001/53412A1 attempted to address some of these issues. Specifically, in that patent, chlorinated vinyl chloride resin compositions are disclosed which have high heat resistance and have high tensile strength at high temperatures, while retaining intact low-temperature impact resistance. It is disclosed that these features are obtained by incorporating a specific combination of reinforcements known as impact modifiers. One of the compositions disclosed therein includes 100 parts by weight of a chlorinated vinyl chloride resin having a combined chlorine content of 62 to 70 wt.% and, incorporated therein, either (a) 1 to 12 parts by weight of an ABS resin and 1 to 5 parts by weight of an acrylic modifier resin or (b) 1 to 12 parts by weight of an ABS resin and 2 to 9 parts by weight of an MBS resin. The other composition disclosed therein includes 100 parts by weight of a chlorinated vinyl chloride resin having a combined chlorine content of 62 to 70 wt.% and, incorporated therein, 1 to 12 parts by weight of a specific ABS resin, and 2 to 9 parts by weight of a specific MBS resin.

Notwithstanding the above, the WO Patent Application does not disclose or suggest ways of further improving the physical and processing characteristics of chlorinated vinyl chloride compositions. The plastic manufacturing industry would greatly welcome the identification of a chlorinated vinyl chloride compositions that provides high heat resistance and high tensile strength at high temperatures, while retaining low-temperature impact resistance, superior thermal stability, superior impact resistance and/or superior appearance without adversely affecting throughput capabilities.

Accordingly, one object of this invention is to provide novel chlorinated vinyl chloride compositions having high heat resistance and high tensile strength at high temperatures, while retaining low-temperature impact resistance, superior thermal stability, superior impact resistance and/or superior appearance.

This and other objects will be apparent to those skilled in the art after reading the specification and appended claims.

The novel chlorinated vinyl chloride resins of the present invention are obtained by combining a chlorinated vinyl chloride resin component with an impact modifier component. In one embodiment, the chlorinated vinyl chloride resin compositions comprise:

> 1. 100 parts by weight of a chlorinated vinyl chloride resin having a combined chlorine content of 62 to 70 wt.%, and
> 2. an impact modifier component which consists essentially of one of the following blends:
>
>> a. a blend comprising an acrylonitrile-butadiene- styrene (ABS) resin and an acrylic modifier resin, or
>>
>> b. a blend comprising an ABS resin and an methacrylate / butadiene /styrene (MBS) resin.

In this embodiment, at least one of the following must exist:

> 1. The impact modifier component includes graft copolymer particles having a void-containing rubber portion.
>
> 2. The impact modifier component further includes at least 1 weight percent of a processing oil component.
>
> 3. The impact modifier component further includes at least 2 weight percent of a processing aid component.

   4. The impact modifier component contains at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

In another embodiment, the chlorinated vinyl chloride resin composition of the present invention comprises:

   1. 100 parts by weight of a chlorinated vinyl chloride resin having a combined chlorine content of 62 to 70 wt.%, and

   2. an impact modifier component which consists essentially of one of the following blends:

      a. a blend comprising an MBS resin and an acrylic modifier, or
      b. a blend comprising an MBS resin, an acrylic modifier, and an ABS resin.

The term "units derived from" used herein refers to polymer molecules that are synthesized according to known polymerization techniques wherein a polymer contains "units derived from" its constituent monomers.

The term "molecular weight" used herein refers to the weight average molecular weight of polymer molecules as determined by the gel permeation chromatography method.

The term "alkyl (meth)acrylate" used herein refers to both alkyl acrylate and alkyl methacrylate monomer compounds.

The term "stage" used herein is intended to encompass its broadest possible meaning, including the meaning conveyed in prior art such as in U.S. Patent 3,793,402 which offers various means for achieving "staged" polymers.

The term "parts" used herein is intended to mean "parts by weight". Unless otherwise stated, "total parts by weight" do not necessarily add to 100.

The term "weight percent" used herein is intended to mean "parts per hundred by weight" wherein the total parts add to 100.

The term "particle size" used herein refers to the mean particle diameter of a population of particles.

As stated above, in one embodiment, the chlorinated vinyl chloride resin compositions comprise:

   1. 100 parts by weight of a chlorinated vinyl chloride resin having a combined chlorine content of 62 to 70 wt.%, and

   2. an impact modifier component which consists essentially of one of the following blends:

      a. a blend comprising an ABS resin and an acrylic modifier resin, or
      b. a blend comprising an ABS resin and an MBS resin.

When practicing this specific embodiment, at least one of the following must be present:

   1. The impact modifier component includes graft copolymer particles having a void-containing rubber portion.

   2. The impact modifier component further includes at least 1 weight percent of a processing oil component.

   3. The impact modifier component further includes at least 2 weight percent of a processing aid component.

   4. The impact modifier component contains at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

Each of these will now be discussed in detail.

## Presence Of A Void-Containing Rubber Portion

Firstly, the impact modifier component includes at least one population of polymeric particles which have a void-containing rubber portion in which the volumetric proportion of the voids defined within the rubber portion ranges from 1 to 90%.

The void-containing rubber particles can be prepared by applying techniques used in the field of paints. For example, there are (a) methods of preparing a W/O/W emulsion and polymerizing a monomer of the O layer (O: hydrophobic, W: hydrophilic); (b) methods of hollowing by swelling core-shell particles having a swellable core at a temperature of not less than Tg of the shell layer; (c) methods of two stage polymerization of polymers having different solubility parameters; (d) methods of finely dispersing a polymerizable monomer mixture containing a crosslinkable monomer and hydrophilic monomer and an oily substance in water to give a O/W emulsion and then polymerizing for crosslinking and removing the oily substance after the crosslinking; and (e) methods of using a phenomenon, in which a carboxylic acid unit copolymerized in the particle moves in the particle under acidic or alkaline conditions as set out in *"Application of Synthetic Latex"* by Takaaki Sugimura, *et al,* pp. 285, published by Kobunshi Kankokai (1993).

In this specific embodiment, the void-containing rubber particles can be prepared by any of the method known to those skilled in the art, including the methods set out in the prior paragraph. However, for illustrative purposes, one method of practicing process (b) is described below.

First, rubber polymer particles or hard polymer particles are used as a core. To an aqueous dispersion or latex of these polymer particles are added a monomer mixture for a rubber polymer forming a shell and an oily substance for swelling the polymer particles of the core. Thus, the polymer particles of the core are swelled by the oily substance. At the time when the polymer particles are swelled enough, the monomer mixture is polymerized to form the shell comprising the rubber polymer. Then, by removing the oily substance swelling the core, the core is shrunk and a cavity arises between the shell of rubber polymer and the polymer particle of the core. Thus, the void-containing rubber particles can be obtained.

The void-containing rubber particles have at least one cavity (hollow part) defined therein. The number of the cavities is not limited to one. The shape of the cavity or cavities is also not limited; and, the cavity or cavities may be in the form of sphere, flat sphere, pore or honeycomb. Also, on the inner surface of the cavity or cavities, there may exist concave or convex or protrusions.

The volumetric proportion (cavity ratio) of the cavity to the rubber particle typically ranges from 1 to 90%. It is within the scope of this invention for cavity ratio to range from 5 to 80%; or from 10 to 70%, or from 15 to 60%. The preferred cavity ratio depends, in part, on the desired properties of the resulting polymeric composition. After reading this specification, those skilled in the art will be able to determine the cavity ratio which meets their needs.

The average particle size of the void-containing rubber particles typically ranges from 50 to 2,000 nm. It is within the scope of this invention for these void-containing rubber particles to have an average particle size ranging from 75 to 1,750 nm; or from 100 to 1,500 nm, or from 200 to 1,000 nm. The preferred average particle size of the void-containing rubber particles depends, in part, on the desired properties of the resulting polymeric composition. After reading this specification, those skilled in the art will be able to determine the average particle size which best suits their needs.

The rubber component of these void-containing rubber particles typically has a glass transition temperature ("Tg") of not greater than 20°C. It is, however, within the scope of this invention for the Tg of this rubber component to be less than 0°C; or less than -20°C, or less than -40°C. The preferred Tg of the rubber component depends, in part, on the desired properties of the resulting polymeric composition. After reading this specification, those skilled in the art will be able to determine Tg which best suits their needs.

In this embodiment, a crosslinking agent can, optionally be present in the void-containing rubber portion of the polymeric particles. If present, the concentration of the crosslinking agent typically ranges from 0.01 to 5 weight percent. It is within the scope of this invention for the concentration of the crosslinking agent to range from 0.05 to 4 weight percent; or from 0.1 to 3 weight percent; or from 0.15 to 2 weight percent; or from 0.2 to 1 weight percent. The above weight percentages are based on the total weight of the void-containing rubber portion.

Examples of crosslinking agents that can be used when practicing this invention include: allyl methacrylate, divinylbenzene, diallyl phthalate, polyethylene glycol dimethacrylate, 1,3-butylene glycol dimethacrylate, and ethylene glycol dimethacrylate. These may be used solely or in a combination use of two or more thereof.

## Presence of a Processing Oil Component

The impact modifier component further includes at least 1 weight percent of a processing oil component. In this embodiment, the percentage of the weight of the processing oil component to the weight of the total population of polymeric particles typically ranges from 1 to 30 weight percent; or from 2 to 25 weight percent; or from 3 to 20 weight percent.

Moreover, the ratio of the weight of the processing oil component to the weight of the impact modifier component typically ranges from 0.1:10 to 5.0:10. It is within the scope of this embodiment of the invention for this weight ratio to range from 0.5:10 to 4.5:10; or from 1.0:10 to 4.0:10; or from 1.5:10 to 3.5:10. The actual ratio used will depend upon the relative solubility of the processing oil component in the particular plastic resin and the impact modifier component . However, when the ratio is too large, problems of over lubrication can be encountered.

The term "processing oil" as it relates to the term "processing oil component" includes: (a) polymers which have a weight average molecular weight (Mw) of less than 5,000 g/mol; (b) alkylacrylates having an alkyl group containing 12 or more carbon atoms; (c) esters containing carboxylic acids or alcohols with 12 or more carbon atoms; (d) vegetable oils; (e) marine oils; (f) industrial oils; (g) palm oils; (h) animal fats; and (i) mineral oils.

Examples of (a) include: polybutene, polydimethylsiloxane, polypropylene, polybutadiene, and polyisoprene. Examples of (b) include: stearyl (meth)acrylate, and lauryl (meth)acrylate. Examples of (c) include: methyl stearate, ethyl stearate, butyl stearate, and stearyl citrate. Examples of (d) include: sunflower oil, peanut oil and olive oil. An example of (e) includes: cod liver oil. Examples of (f) include: castor oil and linseed oil. An example of (g) includes: coconut oil. An example of (h) includes: tallow. Examples of (i) include: paraffinic oils with saturated straight or branched chains or rings containing at least 20 carbon atoms; naphthenic or relatively naphthenic, that is, containing saturated monocyclic (from 4 to 12 carbon atoms) or polycyclic (from 13 to 26 carbon atoms) hydrocarbon oils; microcrystalline wax, paraffin wax and low molecular weight polyolefins such as polyethylene wax, either in liquid, powder or flake form; aromatic oils with a minimum molecular weight of 300 g/mol; and white mineral oils which are a complex mixture of saturated paraffinic and naphthenic hydrocarbons and are free of aromatic compounds, sulphur containing compounds, acids and other impurities.

Under certain preferred circumstances, the processing oil component comprises mineral oils. If employed, the preferred mineral oils are typically those which are easy to handle and do not present environmental or health concerns. Such include those which have a low viscosity and those with a low volatility at the temperatures used during the milling and extrusion blending processes. Examples of specific mineral oils which have these properties include heavy mineral oils such as those termed USP mineral oils (they typically have a density ranging of from 0.86 - 0.90 g/ml), and light mineral oils (they typically have a density ranging of from 0.80-0.85g/ml). One preferred heavy mineral has a density of 0.86 g/ml; and one preferred light mineral oil has a density of 0.84 g/ml, both of these oils are available from the Aldrich Chemical Company.

When practicing this specific embodiment, it is contemplated that the processing oil component can be mixed with at least a portion of the population of polymeric particles by at least one of the following methods: (a) combining the processing oil directly or indirectly with the polymeric particles after the polymeric particles have been formed, or (b) adding the processing oil at the start of, or at some point during, the reaction process used to prepare the polymeric particles.

One example of a preferred process for combining at least one processing oil with the polymeric particles includes the following steps: (a) mixing together an aqueous surfactant solution, a first monomer material and an initiator; (b) heating the resulting mixture to polymerize the monomers; optionally (c) combining the resulting polymerized product from step (b) with a second monomer, a further initiator and further surfactant and heating the resulting mixture to produce a core/shell latex; and (d) isolating the resultant core/shell polymeric particles; wherein the processing oil is added to the reaction mixture during any one or more of the steps (a), (b), (c) or (d). It also within the scope of this embodiment for either at least a portion of the processing oil to be added after step (d), or for all of the processing oil to be added after step (d).

## Presence of a Processing Aid Component

The impact modifier component further includes at least 1 weight percent of a processing aid component. In this embodiment, the percentage of the weight of the processing aid component to the weight of the total population of polymeric particles typically ranges from 1 to 30 weight percent; or from 2 to 25 weight percent; or from 3 to 20 weight percent.

In accordance with this embodiment, the processing aid component comprises at least one population of processing aid particles. The population of processing aid particles can include single-stage particles, two-stage particles, or multi-stage polymer particles, as well as core/shell polymer particles.

When practicing this embodiment, the processing aid particles are typically comprised of polymerized units derived from one or more ethylenically unsaturated monomers. Typically, such monomers include at least one of the following: vinyl aromatics, butadiene, alkyl (meth)acrylates, and (meth)acrylonitriles.

As used in this embodiment, the terms "alkyl (meth)acrylate" refers to a $C_2$ to $C_{12}$ alkyl (meth)acrylate. It is also within the scope of this invention for the term alkyl (meth)acrylate to refer to a $C_2$ to $C_{10}$ alkyl (meth)acrylate, or a $C_2$ to $C_8$ alkyl (meth)acrylate.

In certain preferred embodiments, the processing aid particles contain at least 50 weight methyl methacrylate copolymerized with up to 50 parts by weight of at least one of the following: alkyl (meth)acrylates, styrene, and (meth)acrylonitrile. It is within the scope of this embodiment of the invention for the processing aid particles to contain at least 75 weight methyl methacrylate copolymerized with up to 25 parts by weight of at least one of the following: alkyl (meth)acrylates, styrene, and (meth)acrylonitrile.

In this embodiment, the processing aid particles can include "hard" polymeric particles having a Tg of at least 25°C; or at least 35°C; or at least 45°C, or at least 55°C. It is, however, within the scope of this invention for the processing aid particles to include "soft" polymeric particles having a Tg of at most 20°C; or at most 0°C; or at most -20°C; or at most -40°C.

The molecular weight of the processing aid particles is typically greater than 100,000 g/mol. Generally, the molecular weight of the processing aid particles is greater than 1,000,000 g/mol. If the processing aid particles used in this embodiment include "soft" polymeric particles as defined above, then, additional advantageous results can be observed when their molecular weight is at least 2,000,000 g/mol.; or at least 3,000,000 g/mol., or at least 4,000,000 g/mol., or at least 5,000,000 g/mol.

The upper limit of the molecular weight for the hard or soft polymeric particles of the processing aid is determined, in part, by the processing conditions to which they are exposed, as well as their desired end use. Typically, their molecular weight is less than 12,000,000 g/mol., or less than 10,000,000 g/mol, or less than 8,000,000 g/mol.

Hard polymeric processing aid particles may be formed from homo- or copolymers of monomers such as styrene, methyl methacrylate, butyl acrylate, and ethyl acrylate, especially when the particle is prepared as a single-stage polymer particle. Although it is preferred that the processing aid particles contain no crosslinker, the polymers may contain one or more units derived from multifunctional monomers containing two or more double bonds, such as from about 0.1 to about 5% of at least one of ALMA, allyl acrylate, DALMA, diallyl fumarate, divinylbenzene, a di- or triacrylate ester of a polyol, or a di- or trimethacrylate ester of a polyol.

Soft polymeric processing aid particles may comprise at least a first polymeric stage, wherein at least 50 weight percent of the first polymeric stage comprises a first polymeric component having units derived from one or more of the following: butadiene, and alkyl (meth) acrylates. Thus, the polymeric compositions which have a first polymeric stage comprising copolymers of butadiene and an alkyl (meth)acrylate(s), in any ratio, are encompassed by this invention.

The preferred first polymeric stage of such soft polymeric processing aid particles depends, in part, on the processing conditions to which the processing aid particles are exposed, as well as their desired end use. In one preferred embodiment, at least 50 weight percent of the first polymeric stage comprises a first polymeric component having units derived from one or more alkyl (meth)acrylate, or at least 60 weight percent of one or more alkyl (meth)acrylate, or at least 70 weight percent of one or more alkyl (meth)acrylate, or at least 80 weight percent of one or more alkyl (meth)acrylate.

The upper weight percent limit of the first polymeric component of soft polymeric processing aid particles also depends, in part, on the processing conditions to which the polymeric compositions are exposed, as well as their desired end use. In one preferred embodiment, 100 weight percent of the first polymeric stage comprises a first polymeric component having units derived from one or more alkyl (meth)acrylate, or at most 95 weight percent of one or more alkyl (meth) acrylate, or at most 90 weight percent of one or more alkyl (meth)acrylate, or at most 85 weight percent of one or more alkyl (meth)acrylate.

In the above illustrative examples wherein the first polymeric stage of the soft polymeric processing aid particles comprises a first polymeric component having units derived from one or more alkyl (meth)acrylate, in one preferred embodiment, the first polymeric component has units derived from at least one of the following: ethyl acrylate, butyl acrylate, hexyl acrylate, octyl acrylate, or 2-ethylhexyl acrylate. In another preferred embodiment, the first polymeric component of the soft processing aid particles has units derived from at least one of the following: ethyl acrylate, butyl acrylate, or 2-ethylhexyl acrylate. In still another preferred embodiment, the first polymeric component of the soft processing aid particles has units derived from ethyl acrylate.

In instances where the first polymeric component is less than 100 weight percent of the first polymeric stage, the remaining weight percentage can be made up of at least a second polymeric component. It is within the scope of this embodiment of the invention for there to be a plurality of subsequent polymeric components.

If present, the preferred amount of the second polymeric component depends, in part, on the processing conditions to which the polymeric compositions of the present invention are exposed, as well as their desired end use. In one preferred embodiment, at least 5 weight percent of the first polymeric stage comprises a second polymeric component, or at least 10 weight percent of the first polymeric stage comprises a second polymeric component, or at least 15 weight percent of the first polymeric stage comprises a second polymeric component.

The upper weight percent limit of the second polymeric component present also depends, in part, on the processing conditions to which the polymeric compositions of the present invention are exposed, as well as their desired end use. In one preferred embodiment, 50 weight percent of the first polymeric stage comprises a second polymeric component, or at most 40 weight percent of the first polymeric stage comprises a second polymeric component, or at most 30 weight percent of the first polymeric stage comprises a second polymeric component.

If present, the second polymeric component can be any suitable polymeric compound that yields a Tg of 20°C or less for the final polymeric composition. Examples of such suitable polymeric compounds include: other $C_1$ to $C_{18}$ alkyl (meth)acrylates , isoprene, vinyl acetate, , styrene, alpha methyl styrene , acidic monomers such as acrylic acid or isobutylene, (meth) acrylonitrile, etc.

The preferred second polymeric component depends, in part, by the processing conditions to which the polymeric compositions of the present invention are exposed, as well as their desired end use. If used as a plastic additive, in one preferred embodiment, the second polymeric component comprises at least one of the following: $C_1$ to $C_{18}$ alkyl (meth)acrylates, alpha methyl styrene, styrene, acidic monomers such as (meth)acrylic acid. In another preferred embodiment, the second polymeric component comprises at least one of the following: $C_1$ to $C_{18}$ alkyl (meth)acrylates.

The first polymeric stage can also contain units derived from at least one multi-unsaturated monomer. If present, the concentration of such units ranges from 0.01 weight percent to 5 weight percent of the total weight of the core portion. The multi-unsaturated monomer may be one in which the unsaturated groups are similar and of equal reactivity, such as in divinyl benzene, divinyl adipate, ethylene glycol dimethacrylate, butylene glycol diacrylate, trimethylolpropane trimethacrylate, and the like. On the other hand, the multi-unsaturated monomer may be one in which the unsaturated groups are dissimilar and of unequal reactivity, such as in diallyl maleate, allyl methacrylate, allyl acrylate, and the like.

The processing aid particles used when practicing this embodiment can be prepared by any means known to those skilled in the art. One example of a known process is emulsion polymerization (*e.g.*, US Patent 3,833,686). This process can provide populations of processing aid particles having a mean particle size ranging from 10 to 1,000 nm. It is within the scope of this invention for the populations of processing aid particles to have a mean particle size ranging from 20 to 800 nm; or from 30 to 600 nm; or from 40 to 400 nm.

### Presence of At Least Two Different Populations Of Rubber- Containing Polymeric Particles

The impact modifier component contains at least two different populations of polymeric particles, wherein each has a rubber-containing portion, and wherein the differences are at least one of the following: the void ratio of their rubber containing portions, their chemical compositions, the average sizes of their particles, or the shapes of their particles.

If the difference between the populations is their average particle sizes, there will be a population having a "large" particle size, and a population having a "small" particle size.

The average particle size of the large particles is at least 20 percent larger than the average particle size of the small particles. It is within the scope of this embodiment for the average particle size of the large particles to be at least 30 percent larger; or at least 40 percent larger; or at least 50 percent larger than the average particle size of the small particles.

In this embodiment, the large particles typically have a mean particle diameter which ranges from 50 to 7,000 nm. It is within the scope of this invention for the large particles to have a mean particle diameter which ranges from 100 to 5,000 nm; or from 200 to 3,000 nm; or from 300 to 1,000 nm.

On the other hand, the small particles typically has a mean particle diameter which ranges from 10 to 1,000 nm. It is within the scope of this invention for the small particles to have a mean particle diameter which ranges from 30 to 800 nm; or from 50 to 600 nm; or from 100 to 400 nm.

If the difference between the populations of particles is shape, this can include populations of particles having different morphologies such as: ellipsoidal particles having an aspect ratio greater than 1:1; raspberry-shaped particles; multi-lobe-shaped particles; dumbbell-shaped particles; agglomerated particles; round particles, cylindrical particles, abstract-shaped particles, bi-lobal particles, or circular particles.

If the difference between the populations of particles is the void ratio of their respective rubber-containing portions, the volumetric proportion of the voids defined within one of the populations is at least 20 percent greater than the volumetric proportion of voids defined within the other population of polymeric particles. It is within the scope of this invention for the volumetric proportion of the voids defined within one of the populations is at least 30 percent greater, or at least 40 percent greater, or at least 50 percent greater than the volumetric proportion of voids defined within the other population of polymeric particles.

Also as stated above, the chlorinated vinyl chloride resin composition of the present invention comprises:

> 1. 100 parts by weight of a chlorinated vinyl chloride resin having a combined chlorine content of 62 to 70 wt.%, and
>
> 2. an impact modifier component which consists essentially of one of the following blends:
>
>> a. a blend comprising an MBS resin and an acrylic modifier, or
>>
>> b. a blend comprising an MBS resin, an acrylic modifier, and an ABS resin.

In this embodiment, the existence the additional features identified above as "Presence Of A Void-Containing Rubber Portion", "Presence of a Processing Oil Component", "Presence of a Processing Aid Component", and "Presence of at Least Two Different Populations of Rubber-Containing Polymeric Particles" do not need to exist. It is, however, within the scope of this invention for these feature to be present in this embodiment.

The impact modifier component of this invention can further include at least one of the following compositions: butadiene or styrene-butadiene rubber to which methyl methacrylate-styrene-acrylonitrile is grafted (MABS), and chlorinated polyethylene (CPE).

When practicing this invention, a vinyl chloride resin (prior to post-chlorination) has a polymerization degree of from 600 to 1500, preferably from 600 to 1300. The chlorination degree of the chlorinated vinyl chloride resin is from 62 to 70 wt. %, preferably from 65 to 70 wt. %. When the polymerization degree of a vinyl chloride resin as the raw material of a chlorinated vinyl chloride resin is less than 600, sufficient mechanical strength cannot be attained. When this polymerization degree exceeds 1500, the processing of the resin composition is not easy. When the chlorination degree of a chlorinated vinyl chloride resin is less than 62 wt. %, a resin composition does not have sufficient heat resistance. When the chlorination degree exceeds 70 wt. %, the resin has a high melt viscosity, and thus the processing of a resin composition undesirably encounters technical problems.

Herein, "vinyl chloride resins" include vinyl chloride homopolymers, and also copolymers of vinyl chloride with 20 wt. % or less of at least one other copolymerizable monomer (e.g. ethylene, propylene, vinyl acetate, allyl chloride, allyl glycidyl ether, acrylate esters, vinyl ethers, etc.).

The MBS particles used in the present invention has a butadiene content of less than 60 wt. % and a styrene content of larger than 30 wt. %, in the whole particles. When the butadiene content in the MBS particles is 60 wt. % or more, a die pressure and an extrusion torque increase during the extrusion of the composition to produce pipes. Therefore, a feeding amount should be suppressed to decrease a discharge amount, and thus the productivity of the pipes deteriorates.

The styrene content in the MBS particles should be larger than 30 wt. % to improve the flowability of the chlorinated vinyl chloride resin and thus increase the discharge amount of the composition.

The amount of MBS particles is from 3 to 15 wt. parts per 100 wt. parts of the chlorinated vinyl chloride resin. When the amount of MBS particles is less than 3 wt. parts, the impact resistance of the pipes deteriorates. When the amount of MBS particles exceeds 15 wt. parts, the heat resistance inherent in the chlorinated vinyl chloride resins tends to decrease. The amount of MBS particles is preferably from 4 to 12 wt. parts from the viewpoint of the balance between the impact resistance and heat resistance of the produced pipes.

The MBS particles in the extruded pipes have an average dispersed particle size of 2,000 angstroms or less, preferably 1,800 angstroms or less to improve the impact resistance of the pipes. The lower limit of the average dispersed particle size of the MBS particles is not limited, but is usually 1,000 angstroms.

The average dispersed particle size of the MBS particles can be measured by a conventional method. For example, a composition mass is cut in the form of a sample piece of about 5 mm square, and dyed by an osmic acid dyeing method (dipping the sample piece in a 1 wt. % aqueous solution of osmic acid). Then, the sample piece is very thinly sliced and observed with a transmission electron microscope. The MBS particles are seen as black circles, and their diameters are measured and averaged.

It is preferable to use MBS having a Vicat softening point of at least 60°C, under a load of 1 kg to increase a discharge amount by increasing a feed amount while suppressing a die pressure and an extrusion torque during the extrusion process of pipes. The Vicat softening point of MBS usually does not exceed 90°C.

In certain specific embodiments, it is preferred to use an MBS resin which comprises graph copolymer particles having a rubber-containing core portion at least partially grafted to a shell portion and are prepared by:

1. coagulating an MBS resin having the following compositional relationships:

   a)

   $$-1.5x + 140 \leq y \leq -1.65x + 180,$$

   and

   b)

   $$55 \leq x \leq 70$$

where **x** is the butadiene content (wt. %) of the MBS resin; and **y** is the Vicat softening point (°C) of the MBS resin;

2. adding to the coagulated MBS resin a hard polymer in an amount of 0.1 to 10 parts by weight per 100 parts by weight of the coagulated MBS resin; and

3. recovering a powder from the mixture of the coagulated MBS resin and the hard polymer.

In general, the higher the softening point, the better the granulation property and the blocking resistance. The range of the Vicat softening point "**y**" of MBS resin used in this embodiment of the invention is represented by the following equation:

$$- 1.5x + 140 \leq y \leq -1.65x + 180 ,$$

preferably

$$- 1.2x + 128 \leq y \leq -1.65x + 180 ,$$

wherein **x** is the Bd content (% by weight) of MBS resin.

In general, the Vicat softening point is mainly determined by the kinds and amounts of monomers which constitute MBS resin and is closely related with the glass transition temperatures of the respective components, although it is also affected by the molecular arrangement of the monomers and the intramolecular or intermolecular structure of the monomers. For example, among methyl methacrylate, butadiene and styrene which can be used as the components of MBS resin, if butadiene which is low in glass transition temperature is used in a large amount, the Vicat softening point is lowered, and if methyl methacrylate or styrene which are relatively high in glass transition temperature is used in a large amount, the Vicat softening point is raised. Also, even in the case of MBS resins which are composed of the same kinds and same amounts of monomers, the Vicat softening points differ if the rubbers used therein are for example a polybutadiene and a styrene-butadiene copolymer rubber. Further, MBS resins having a high degree of intramolecular or intermolecular crosslinking tend to have a high Vicat softening point. The Vicat softening point of the obtained MBS resin can be adjusted by selecting and adjusting the kinds and amounts of the monomers used.

The chlorinated vinyl chloride resin composition can contain 1 to 5 wt. parts of a chlorinated polyethylene having a chlorine content of from 10 to 50 wt. %, per 100 wt. parts of the chlorinated vinyl chloride resin, to increase a discharge amount through the decrease of a die pressure and an extrusion torque during the extrusion process of pipes. When the chlorine content of the chlorinated polyethylene is outside the above range, the compatibility of the chlorinated polyethylene with the chlorinated vinyl chloride resin as a base resin deteriorates, and thus the extruded pipes tend to have reduced impact strength. The chlorinated polyethylene preferably has a chlorine content of from 30 to 40 wt. % to improve the impact strength of the extruded pipes.

When the amount of the chlorinated polyethylene is less than 1 wt. parts, it is difficult to achieve the effect to increase a discharge amount through the suppression of a die pressure and an extrusion torque. When the amount of the chlorinated polyethylene exceeds 5 wt. parts, the heat resistance inherent in the chlorinated vinyl chloride resin deteriorates.

The chlorinated vinyl chloride resin composition of the present invention may preferably contain stabilizers and/or lubricants, in addition to the MBS particles and the chlorinated polyethylene. Stabilizers may be any conventional stabilizers for chlorinated vinyl chloride resins such as, organic based stabilizers, tin-base stabilizers, lead-base stabilizers, *etc*. Among them, organic based stabilizers and tin-base stabilizers are preferable.

Preferable examples of tin-base stabilizers are alkyltin compounds (*e.g.* methyltin, butyltin, octyltin, mixed metal alkyltin, dialkyltin dicarboxylate salts, *etc.*). Other examples of tin-base stabilizers are mercaptomethyltin, mercaptooctyltin, mercaptobutyltin, dialkyltinbis (alkylmercaptocarboxylate salt), di-n-octyltin-S,S'-bis(isooctylmercaptoacetate), butyltin maleate polymer, butyltin maleate ester, octyltin maleate polymer, octyltin maleate ester, *etc*.

The amount of a stabilizer is preferably from 1.5 to 5 wt. parts per 100 wt. parts of a chlorinated vinyl chloride resin. When the amount of a stabilizer is less than 1.5 wt. parts, the thermal stability of a chlorinated vinyl chloride resin composition may not be improved. When the amount of a stabilizer exceeds 5 wt. parts, the effect to improve the thermal stability reaches the limit, and thus the thermal stability will not be improved in a degree comparable to the added amount of the stabilizer.

The chlorinated vinyl chloride resin composition of the present invention may optionally contain lubricants. Examples of lubricants include polyglycerol of di- or trioleate, polyethylene, oxidized polyethylene, high molecular weight paraffin waxes, etc. Among them, polyethylene waxes are preferable.

The amount of a lubricant is preferably from 1.5 to 4 wt. parts per 100 wt. parts of a chlorinated vinyl chloride resin. When the amount of a lubricant is less than 1.5 wt. parts, the composition has a high melt viscosity, and thus its extrusion processability deteriorates. When the amount of a lubricant exceeds 4 wt. parts, the lubricity of the resin against metals becomes too high, and thus the composition may pulsate when it is discharged in the extrusion processing process.

The chlorinated vinyl chloride resin composition of the present invention may optionally contain other additives, which are compounded in conventional chlorinated vinyl chloride resin compositions, in addition to the above additives. Examples of the other additives are fillers (*e.g.* titanium dioxide, calcium carbonate, *etc.*), colorants, and the like.

The chlorinated vinyl chloride resin composition of the present invention may be prepared by compounding and kneading the above essential and optional components with any conventional mixing and kneading apparatuses.

The chlorinated vinyl chloride resin composition of the present invention is used particularly to produce extruded pipes, although it may be used to produce other shaped products which are produced from conventional chlorinated vinyl chloride resins.

**Claims**

1. A chlorinated vinyl chloride resin composition comprising:

   a. a chlorinated vinyl chloride resin component comprising 100 parts by weight of a chlorinated vinyl chloride resin having a combined chlorine content of 62 to 70 wt.%, and
   b. an impact modifier component which consists essentially of one of the following blends:

   1) a blend comprising an methacrylate / butadiene / styrene (MBS) resin and an acrylic modifier, or
   2) a blend comprising an MBS resin, an acrylic modifier, and an acrylonitrile-butadiene-styrene (ABS) resin.

2. A chlorinated vinyl chloride resin composition as recited in claim 1, wherein said MBS resin has a Vicat softening point of at least 60°C. under a load of 1 kg.

**3.** A chlorinated vinyl chloride resin composition as recited in claim 1, wherein the amount of said MBS resin ranges from 4 to 12 wt. parts per 100 wt. parts of said chlorinated vinyl chloride resin.

**4.** A chlorinated vinyl chloride resin composition as recited in claim 1 which further comprises 1.5 to 5 wt. parts of a stabilizer and 1. 5 to 4 wt. parts of a lubricant, per 100 wt. parts of said chlorinated vinyl chloride resin.

**5.** A chlorinated vinyl chloride resin comprising:

> a. a chlorinated vinyl chloride resin component comprising 100 parts by weight of a chlorinated vinyl chloride resin having a combined chlorine content of 62 to 70 wt.%, and
> b. an impact modifier component which consists essentially of one of the following blends:
>
>> 1) a blend comprising an ABS resin and an acrylic modifier resin, or
>> 2) a blend comprising an ABS resin and an MBS resin, wherein at least one of the following exists:
>>
>>> a) the impact modifier component includes graft copolymer particles having a void-containing rubber portion,
>>> b) the impact modifier component further includes at least 1 weight percent of a processing oil component,
>>> c) the impact modifier component further includes at least 2 weight percent of a processing aid component, or
>>> d) the impact modifier component contains at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

**6.** A chlorinated vinyl chloride resin composition as recited in claim 5, wherein said MBS resin has a Vicat softening point of at least 60°C. under a load of 1 kg.

**7.** A chlorinated vinyl chloride resin composition as recited in claim 5, wherein the amount of said MBS resin ranges from 4 to 12 wt. parts per 100 wt. parts of said chlorinated vinyl chloride resin.

**8.** A chlorinated vinyl chloride resin composition as recited in claim 5 which further comprises 1.5 to 5 wt. parts of a stabilizer and 1. 5 to 4 wt. parts of a lubricant, per 100 wt. parts of said chlorinated vinyl chloride resin.